# FASCICULE DE BREVET EUROPEEN

(11) **EP 0 935 162 B1**
(45) Date de publication et mention de la délivrance du brevet: **03.09.2003**
(21) Numéro de dépôt: 98102004.3
(22) Date de dépôt: 05.02.1998
(51) Int. Cl.: G03B 29/00

(54) **Objectif pour appareil de prise de vues, appareil muni d'un tel objectif et procédé pour fabriquer un tel appareil**
Kameraobjektiv, Kamera mit einem derartigen Objektiv und Verfahren zur Herstellung einer derartigen Kamera
Cameralens, camera with such a lens and method of producing such a camera

(43) Date de publication de la demande: 11.08.1999
(73) Titulaire: ASULAB S.A., CH-2501 Bienne (CH)
(72) Inventeur: Grupp, Joachim, 2003 Neuchâtel (CH); Clot, Cyrille, 2300 La Chaux-de-Fonds (CH)
(74) Mandataire: Thérond, Gérard Raymond

(56) Documents cités:
- DE-U- 8 524 682
- FR-A- 1 167 779
- FR-A- 2 671 411
- PATENT ABSTRACTS OF JAPAN vol. 97, no. 8, 29 août 1997 & JP 09 105871 A (OLYMPUS OPTICAL CO. LTD.), 22 avril 1997,
- PATENT ABSTRACTS OF JAPAN vol. 7, no. 180 (P-215), 9 août 1983 & JP 58 083837 A (GEN ENGINEERING K.K.), 19 mai 1983,

## Description

La présente invention concerne un objectif pour appareil de prise de vues, par exemple un appareil photographique ou une caméra.
De tels objectifs comportent un châssis et au moins une lentille dont l'une des faces définit la surface externe de l'objectif.

Dans les objectifs actuellement utilisés, une attention toute particulière est apportée à la protection de la surface externe, afin d'éviter que des objets durs ne la rayent. Cette précaution revêt une grande importance, car un défaut de la surface d'une lentille détériore considérablement la qualité des prises de vues.

Le châssis de tels objectifs est généralement de forme cylindrique et s'étend vers l'extérieur au-delà de la surface externe de la lentille. L'angle que forment ensemble les surfaces de raccordement du châssis et de la lentille est généralement voisin de 90°. De la sorte, la lentille est protégée par l'extrémité du châssis.

Dans une telle construction, les surfaces de raccordement du châssis et de la lentille définissent une gorge dans laquelle des saletés peuvent s'accumuler. Pour l'éviter, il est généralement prévu de couvrir l'objectif au moyen d'un capuchon amovible. Une telle mesure permet de retarder cette accumulation, mais en aucun cas de l'éviter. En outre, le nettoyage de la gorge nécessite des précautions et peut difficilement être parfait jusqu'au fond.

Cet inconvénient est particulièrement préjudiciable aux objectifs de petit diamètre équipant par exemple des appareils miniatures, destinés à être intégrés à une montre.

De tels appareils sont particulièrement exposés à la saleté. On constate qu'à l'usage, celle-ci s'accumule très rapidement dans les anfractuosités.

Il est en outre malaisé de munir ce type d'appareils d'un capuchon amovible facilement retirable au moment de la prise de vue.

Examples d'appareils conventionnels sont divulgués dans : JP-A-09-105871, DE-U-85 24 682, FR-A-1 167 779, FR-A-2 671 411, JP-A-58-083 837.

L'invention a pour but principal d'éviter l'accumulation de saleté sur la surface externe de la lentille, sans pour autant l'exposer à la formation de rayures.

A cet effet, l'invention a donc pour objet un objectif pour appareil de prise de vues, selon la rev. 1.

Grâce à ses caractéristiques, l'objectif reste propre, l'absence d'anfractuosité permettant d'éviter l'accumulation de saleté. De plus, comme la dureté du matériau de la lentille définissant la surface extérieure de l'objectif est supérieure ou égale à celle du verre trempé, il est pratiquement inrayable.

Selon une caractéristique avantageuse de l'invention, l'objectif comporte une première lentille, frontale, une deuxième lentille intermédiaire, et une troisième lentille, postérieure. Les lentilles frontale et postérieure, sont convergentes et sont réalisées avec des matériaux ayant un indice de réfraction et un nombre de Abbe aussi élevé que possible. La lentille intermédiaire est divergente et elle est réalisée en un matériau ayant un nombre de Abbe aussi faible que possible. Une telle structure permet de compenser les aberrations chromatiques.

Il est de la sorte possible de réaliser un objectif de faible longueur et de bonne qualité optique.

L'invention a également pour but de réaliser un appareil de prise de vues selon la rev. 6 particulièrement robuste et de qualité. L'invention concerné également un procédé selon la rev. 8 pour la fabrication d'un appareil de prise de vues selon la rev. 6 d'obtenir des surfaces parfaitement continues malgré le fait que l'objectif soit rapporté sur le boîtier.

L'invention concerne enfin un appareil de prise de vues de très petites dimensions dont le boîtier est celui d'une montre-bracelet qui sera décrite par la suite plus en détail à titre d'exemple et désigné par commodité par "montre-caméra".

D'autres avantages et caractéristiques de l'invention apparaîtront à la lecture de la description détaillée suivante d'exemples de réalisation donnés à titre illustratif et non limitatif en référence aux dessins annexés dans lequel :
- la figure 1 montre en coupe un objectif selon l'art antérieur;
- la figure 2 représente, en coupe, un objectif selon l'invention;
- la figure 3 représente en perspective une montre-caméra selon l'invention;
- la figure 4 est une vue en coupe de l'objectif de la figure 3, selon un plan IV-IV parallèle à la montre et passant par l'axe optique;
- la figure 5 représente en perspective une deuxième variante d'une montre-caméra selon l'invention; et
- la figure 6 est une vue en coupe de l'objectif de la figure 5 selon un plan VI-VI parallèle à la montre et passant par l'axe optique.

Au cours de la description, on appellera "antérieures" les parties se trouvant à l'avant de l'objectif, à l'extérieur de l'appareil. Les parties "postérieures" sont au contraire placées à l'arrière de l'objectif, à l'intérieur de l'appareil. En outre, les termes "radial" et "axial" se réfèrent à l'axe optique de l'objectif.

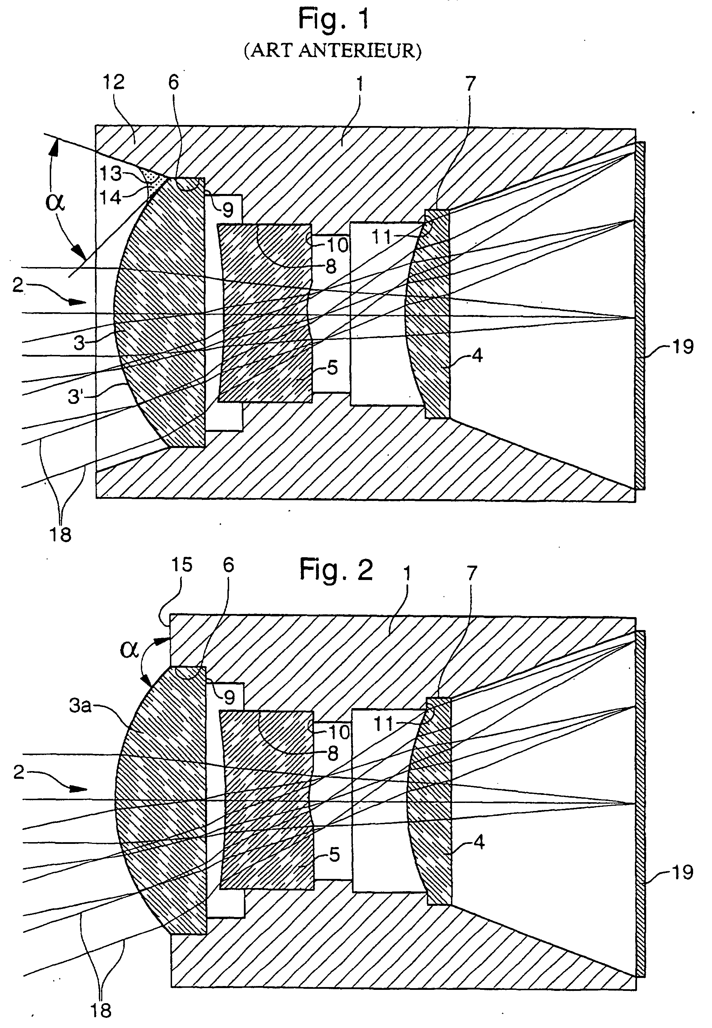

Ainsi qu'on peut le voir sur la figure 1, les objectifs connus comportent un châssis 1 de forme tubulaire et cylindrique, abritant à l'intérieur un jeu de lentilles, comprenant par exemple une lentille frontale 3 convergente, dont l'une des faces, 31 définit la surface antérieure de l'objectif 2, une lentille postérieure 4 convergente, ainsi qu'une lentille intermédiaire 5 divergente. Cet objectif 2 permet de focaliser les rayons 18 sur une surface photosensible 19.

L'intérieur du châssis 1 présente des surfaces cylindriques et planes. Les surfaces cylindriques, portant les références 6, 7 et 8, assurent respectivement le positionnement radial des lentilles 3, 4 et 5. Les surfaces planes portant les références 9, 10 et 11 définissent des surfaces de positionnement axial pour positionner respectivement les lentilles 3, 4 et 5.

Les lentilles 3, 4 et 5 sont fixées au châssis par des moyens connus, non représentés au dessin, par exemple par collage ou au moyen de bagues filetées coopérant avec des taraudages pratiqués dans le châssis.

Le châssis 1 se prolonge vers l'avant pour former une collerette 12, qui s'étend au moins jusqu'à l'extrémité de la lentille 3, pour la protéger de corps qui pourraient éventuellement entrer en contact avec elle.

La surface 31 de la lentille 3 et la collerette 12 définissent ensemble une gorge 13 à l'intérieur de laquelle risque de s'accumuler un dépôt 14 de saletés. Celui-ci a pour effet de réduire le diamètre utile de la lentille 3, voire de générer une diffusion de la lumière susceptible d'affecter la qualité des images.

Plus l'angle α, que définissent la surface 3a et la collerette 12, est faible, plus le risque d'encrassement est élevé. Ainsi qu'on peut le voir sur le dessin, cet angle est généralement inférieur à 90°.

L'objectif selon l'invention représenté à la figure 2, comporte également un châssis 1 et une optique composée d'un même assemblage de lentilles. Le châssis 1 définit les mêmes surfaces de positionnement 6 à 11 pour positionner les lentilles 3, 4 et 5. Il se différencie de l'objectif de la figure 1 par le fait qu'il ne comporte pas de collerette. Au contraire, le châssis 1 présente une face antérieure 15 plane et contiguë à la surface 3a de la lentille 3.

La face 15 et la surface 3a définissent ensemble un angle α obtus, proche de 180°. Il est dans tous les cas supérieur à 120°. On comprendra aisément que dans ces conditions, il soit pratiquement impossible que s'accumule un dépôt susceptible d'affecter la qualité de l'objectif. Si malgré tout, des saletés adhéraient à la surface 3a, il est considérablement plus aisé de la nettoyer. Au cas où un tel objectif est monté dans un appareil fixé au poignet de l'utilisateur, par exemple lorsqu'un tel appareil est intégré dans une montre-bracelet, le nettoyage se fait de manière quasi automatique, par le frottement des vêtements sur la surface 3a.

Il est bien évident qu'un objectif tel que défini en référence à la figure 2 n'est plus protégé contre des chocs et des rayures. Ce problème peut être résolu en utilisant, pour la fabrication de la lentille frontale 3 du saphir ou du verre trempé, ou tout autre matériau transparent dont la dureté est supérieure à celle des objets courants, de manière que ceux-ci ne puissent rayer la lentille.

En plus de la dureté que confère le saphir, ses autres caractéristiques optiques permettent la réalisation d'objectifs de qualité, pour une faible longueur.

Un compromis intéressant peut être obtenu avec trois lentilles. La lentille antérieure 3 et la lentille postérieure 4, toutes deux convergentes, sont réalisées en un matériau ayant un nombre de Abbe (v) élevé. La lentille intermédiaire 5 est divergente et fabriquée en un matériau ayant un nombre de Abbe faible. De plus, il est avantageux que les lentilles convergentes 3 et 4 aient un indice de réfraction aussi élevé que possible et que la lentille divergente ait un indice de réfraction aussi faible que possible.

Dans un mode de réalisation particulièrement avantageux, la lentille antérieure 3 est en saphir (n = 1,768, v = 72,41), la lentille postérieure 4 en PMMA (polymethyl-metha-acrylate)(n = 1,492, v = 57,43) et la lentille intermédiaire 5 en SAN (Styrène acrylonitrile) (n = 1,59, v = 30). Bien que l'indice de réfraction du SAN soit plus élevé que celui du PMMA, il présente un compromis tout à fait satisfaisant du point de vue optique. De plus, ses caractéristiques mécaniques offrent une bonne sécurité quant aux risques de déformation, dus par exemple aux changements de température et aux chocs.

Le tableau ci-après donne à titre d'exemple les caractéristiques d'un objectif selon la figure 2, de faible encombrement et de bonne qualité optique, réalisé avec les matériaux énoncés ci-dessus.

| Lentille | Matériau | R1[mm] | R2[mm] | ⌀[mm] | e[mm] | d[mm] |
|---|---|---|---|---|---|---|
| 3 | Saphir | 4,69 | ∞ | 6,1 | 2,00 | 0,38 |
| 4 | PMMA | 6,41 | ∞ | 4,7 | 1,00 | 4,05 |
| 5 | SAN | -23,8 | -17,5 | 4,0 | 2,00 | 2,25 |

Dans ce tableau, R1 est le rayon de courbure de la face antérieure d'une lentille, R2 est le rayon de courbure de la face postérieur, Ø son diamètre, e son épaisseur et d la distance sur l'axe optique d'une lentille avec la suivante, ou avec la surface photosensible pour la lentille 4.

L'objectif réalisé sur cette base présente un angle d'ouverture de 20°, pour une distance de 11,68 mm entre la surface 3a et la surface photosensible 19, sur laquelle l'image de l'objet à photographier doit se dessiner. La distance focale est de 10,50 mm. Un tel objectif est compatible avec les dimensions d'une montre bracelet.

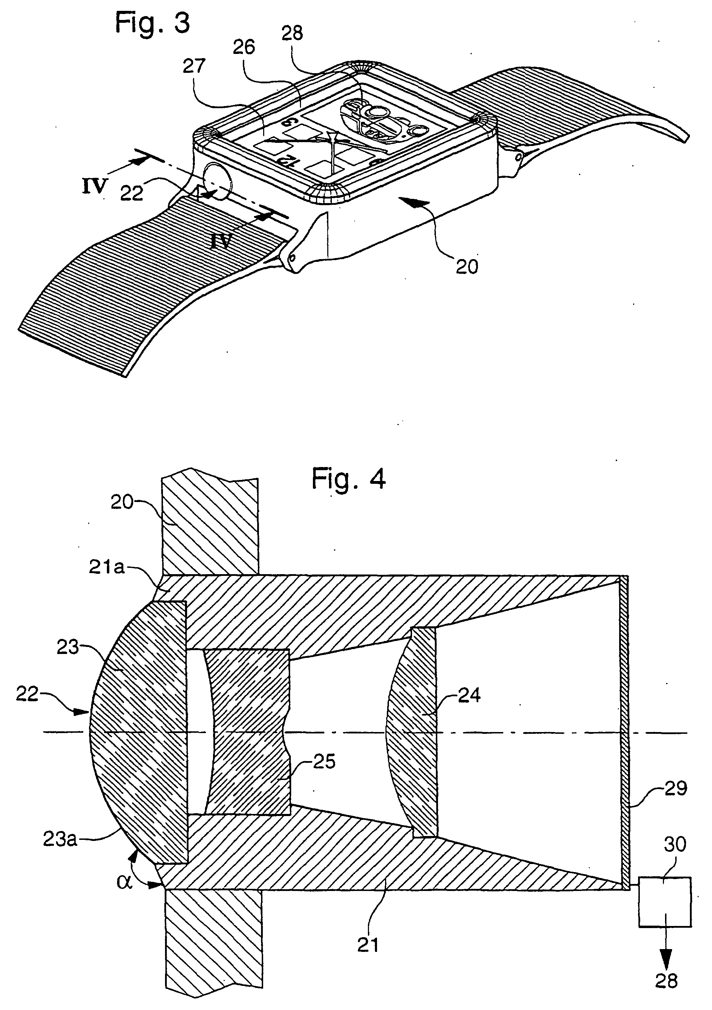

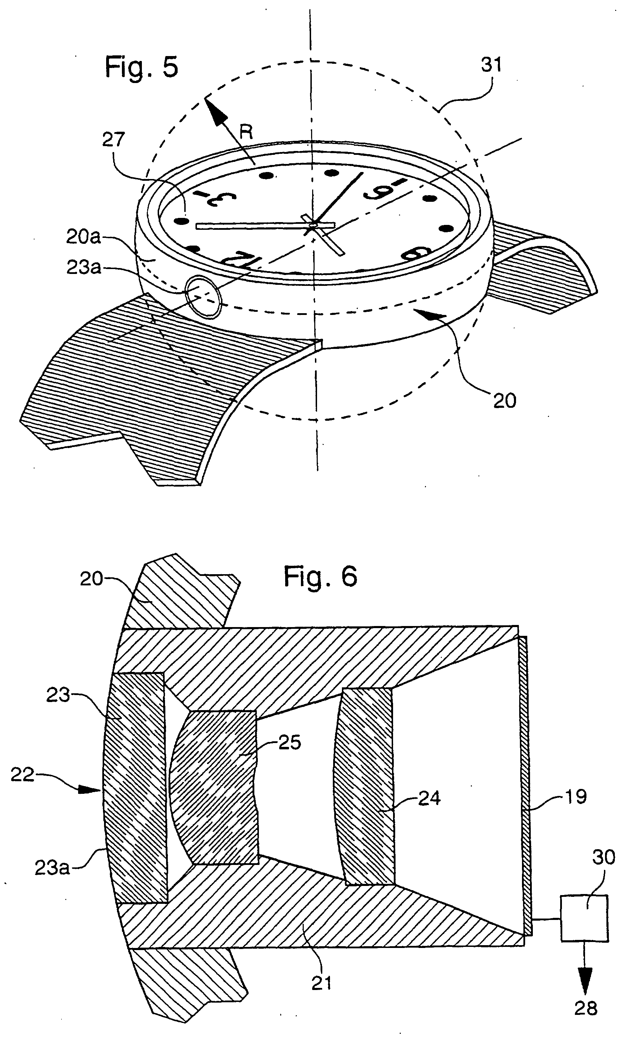

En se référant maintenant aux figures 3 et 4, on a représenté une montre munie d'un appareil selon l'invention. Elle comporte un boîtier rectangulaire 20, fermé à sa partie supérieure par une glace 26 disposée au-dessus d'un cadran 27 qui supporte une cellule d'affichage 28. Un objectif 22 est monté dans la paroi du boîtier 20. Il présente les mêmes caractéristiques que l'objectif décrit à la figure 2. Il est doté d'une lentille frontale 23, d'une lentille postérieure 24 et d'une lentille intermédiaire 25. De manière plus précise, l'objectif 22 est monté dans un châssis 21, comparable au châssis 1 de la figure 2, fixé dans le boîtier 20, avec un axe sensiblement parallèle à la face avant de la glace 26.

L'objectif 22 présente une face antérieure formée de la surface 23a de la lentille 23 et de la surface 21a du châssis 21 adjacente à la lentille 23.

Un dispositif optoélectronique 29 est placé à l'arrière de l'objectif 22. Il transforme la lumière en signaux électriques. Ces signaux sont traités par un circuit électronique schématiquement représenté en 30, qui commande à la fois la montre et l'appareil de prise de vue. Le circuit électronique 30 est notamment relié à la cellule d'affichage 28 qui fait office de viseur.

Ainsi qu'on peut le voir sur la figure 4, la lentille 23 est légèrement proéminente. Sa surface 23a forme avec la surface 21a du châssis 21 un angle α obtus, supérieur à 120°. Comme on peut l'imaginer sans peine, cet angle ne permet pas l'accumulation de saleté.

En se référant à un deuxième mode de réalisation représenté aux figures 5 et 6, on voit que l'appareil diffère de celui représenté aux figures 3 et 4 essentiellement par le fait que la surface 23a de la lentille frontale 23 s'intègre parfaitement dans la surface du boîtier 20. De la sorte, la surface extérieure périphérique 20a du boîtier 20, correspondant à la carrure de la montre, s'inscrit dans une sphère 31 représentée en pointillé sur la figure 5. Le rayon R de cette sphère est sensiblement égal à celui de la surface sphérique définissant la face antérieure 23a de la lentille frontale 23. De la sorte, le boîtier 20 et la lentille 23 définissent une surface continue sans anfractuosité, ni aspérité susceptibles de favoriser un encrassement dans la partie du boîtier 20 portant la lentille 23.

Les caractéristiques d'un objectif remplissant ces conditions, tel que représenté à la figure 4, sont définies dans le tableau ci-dessous:

| Lentille | Matériau | R1[mm] | R2[mm] | ⌀[mm] | e[mm] | d[mm] |
|---|---|---|---|---|---|---|
| 23 | Saphir | 17,5 | -143 | 4,8 | 1,26 | 0,1 |
| 24 | PMMA | 13,1 | 445 | 6,0 | 2,0 | 3,1 |
| 25 | SAN | 2,64 | 2,15 | 3,5 | 1,74 | 3,3 |

Pour obtenir la surface la plus régulière possible, il est envisageable d'effectuer les dernières opérations mécaniques sur la surface extérieure du boîtier après la mise en place de l'objectif 22. Les matériaux formant le boîtier 20 et le châssis 21 auront une dureté inférieure à celle de la lentille 23. En choisissant de manière adéquate les abrasifs, il est possible d'éliminer d'éventuelles différences de niveau entre le boîtier 20, le châssis 21 et la lentille frontale 23, sans que l'état de surface de celle-ci soit modifié.

Dans cette configuration, la lentille 23 peut être en verre trempé, mais plus avantageusement en saphir. De la sorte, la dureté de la lentille 23 est suffisante pour éviter toute rayure tant lors de l'opération finale d'usinage que dans des conditions normales d'utilisation. On peut relever qu'il aurait pu être envisageable de réaliser un objectif avec une fenêtre en saphir plan et des lentilles placées à l'arrière de cette fenêtre. Les essais effectués ont montré que le prix reste sensiblement le même, que la qualité optique est moins bonne et que la longueur de l'objectif est plus grande.

Dans le cas où le matériau utilisé est du saphir, il est évident que la lentille sera usinée dans le cristal selon une orientation assurant un indice de réfraction constant, quel que soit l'angle d'incidence d'un rayon lumineux. En d'autres termes, l'axe optique'du saphir sera confondu avec l'axe de l'objectif.

Ainsi, l'appareil de prise de vues tel que décrit présente une configuration favorable, tant au niveau des caractéristiques optiques que mécaniques. Il peut de la sorte être utilisé dans des conditions particulièrement dures, sans pour autant que ses performances n'en soient affectées.

## Revendications

1. Objectif pour appareil de prise de vues, comportant un châssis (1; 21) et une optique formée d'au moins une lentille frontale (3, 23) dont l'une des faces (3a; 23a) forme la surface antérieure dudit objectif, dans lequel ladite face (3a; 23a) définit avec le châssis (1; 21) un angle de raccordement (α) dont la valeur est supérieure ou égale à 120°,
**caractérisé en ce que** ladite lentille frontale (3; 23) est constituée en un matériau transparent dont la dureté est supérieure ou égale à celle du verre trempé.

2. Objectif selon la revendication 1, **caractérisé en ce que** ladite lentille frontale (3; 23) est convergente.

3. Objectif selon la revendication 1 ou 2, **caractérisé en ce que** ladite surface antérieure (3a; 23a) de la lentille frontale (3; 23) et le châssis (1; 21) définissent ensemble une surface continue.

4. Objectif selon la revendication 1, **caractérisé en ce que** ledit matériau est choisi parmi le saphir et le verre trempé.

5. Objectif selon la revendication 2, **caractérisé en ce que** l'optique dudit objectif comporte en outre une lentille postérieure convergente (4; 24) et une lentille intermédiaire (5; 25) lesdites lentilles étant alignées sur la première lentille (3; 23), et ladite lentille intermédiaire (5; 25) étant divergente et constituée en un matériau présentant un nombre d'Abbé inférieur à celui que présentent les matériaux constituant lesdites lentilles convergentes (3, 4; 23, 24).

6. Appareil de prise de vues comportant un boîtier (20) et muni d'un objectif (22) selon l'une des revendications précédentes, monté solidairement dans une paroi du boîtier (20), appareil dans lequel au moins la partie du boîtier dans laquelle est monté ledit objectif (22) et la surface antérieure (23a) de ladite lentille frontale (23) définissent ensemble une surface sensiblement sphérique.

7. Appareil de prise de vues selon la revendication 6, **caractérisé en ce que** le boîtier (20) est le boîtier d'une montre-bracelet.

8. Procédé de fabrication d'un appareil selon la revendication 6, procédé dans lequel au moins la surface du boîtier (20) dans laquelle est monté ledit objectif (22) est usinée après le montage dudit objectif, par abrasion, au moyen de particules dont la dureté est inférieure à celle du matériau constituant la lentille frontale (3; 23).

## Patentansprüche

1. Objektiv für eine Bildaufnahmevorrichtung, mit einer Fassung (1; 21) und einer Optik, die aus wenigstens einer Frontlinse (3, 23) gebildet ist, deren eine Seite (3a; 23a) die vordere Oberfläche des Objektivs bildet, bei dem die Seite (3a; 23a) mit der Fassung (1; 21) einen Verbindungswinkel (α) festlegt, dessen Wert größer oder gleich 120° ist, **dadurch gekennzeichnet, daß** die Frontlinse (3; 23) aus einem transparenten Material besteht, dessen Härte größer oder gleich derjenigen von Hartglas ist.

2. Objektiv nach Anspruch 1, **dadurch gekennzeichnet, daß** die Frontlinse (3; 23) konvergierend ist.

3. Objektiv nach Anspruch 1 oder 2, **dadurch gekennzeichnet, daß** die vordere Oberfläche (3a; 23a) der Frontlinse (3; 23) und die Fassung (1; 21) zusammen eine ununterbrochene Oberfläche bilden.

4. Objektiv nach Anspruch 1, **dadurch gekennzeichnet, daß** das Material Saphir oder Hartglas ist.

5. Objektiv nach Anspruch 2, **dadurch gekennzeichnet, daß** die Optik des Objektivs ferner eine hintere konvergierende Linse (4; 24) und eine Zwischenlinse (5; 25) aufweist, wobei die Linsen auf die erste Linse (3; 23) ausgerichtet sind, und die Zwischenlinse (5; 25) divergierend ist und aus einem Material besteht, das eine Abbe-Zahl aufweist, die kleiner ist als diejenige, die die Materialien aufweisen, die die konvergenten Linsen bilden (3, 4; 23, 24).

6. Bildaufnahmevorrichtung, die ein Gehäuse (20) umfaßt und mit einem Objektiv (22) nach einem der vorhergehenden Ansprüche versehen ist, das fest in einer Wandung des Gehäuses (20) montiert ist, wobei in der Vorrichtung wenigstens der Abschnitt des Gehäuses, in dem das Objektiv (22) montiert ist, und die vordere Oberfläche (23a) der Frontlinse (23) zusammen eine im wesentlichen sphärische Oberfläche bilden.

7. Bildaufnahmevorrichtung nach Anspruch 6, **dadurch gekennzeichnet, daß** das Gehäuse (20) das Gehäuse einer Armbanduhr ist.

8. Verfahren zum Herstellen einer Vorrichtung nach Anspruch 6, wobei bei dem Verfahren wenigstens die Oberfläche des Gehäuses (20), in der das Objektiv (22) montiert ist, nach Montage des Objektivs durch Abrasion mittels Partikel bearbeitet wird, deren Härte kleiner ist, als diejenige des Materials, das die Frontlinse (3; 23) bildet.

## Claims

1. Lens assembly for a photographic camera, including a frame (1; 21) and an optical system formed of at least one front lens (3; 23) one of whose faces (3a; 23a) forms the front surface of said lens assembly, wherein said face (3a; 23a) defines with the frame (1; 21) a connecting angle (α) whose value is greater than or equal to 120° **characterised in that** said front lens (3; 23) is formed of a transparent material whose hardness is greater than or equal to tempered glass.

2. Lens assembly according to claim 1, **characterised in that** said front lens (3; 23) is converging.

3. Lens assembly according to claim 1 or 2, **characterised in that** said front surface (3a; 23a) of the front lens (3; 23) and the frame (1; 21) together define a continuous surface.

4. Lens assembly according to claim 1, **characterised in that** said material is selected from sapphire and tempered glass.

5. Lens assembly according to claim 2, **characterised in that** the optical system of said lens assembly further includes a converging back lens (4; 24) and an intermediate lens (5; 25), said lenses being aligned with the first lens (3; 23), and said intermediate lens (5; 25) being diverging and formed of a material having a lower Abbe number than that of the materials forming said converging lenses (3, 4; 23, 24).

6. Photographic camera including a case (20) and comprising a lens assembly (22) according to any of the preceding claims, fixedly mounted in a wall of the case (20), camera wherein at least the portion of the case in which said lens assembly (22) is mounted and the front surface (23a) of said front lens (23) together define a substantially spherical surface.

7. Photographic camera according to claim 6, **characterised in that** the case (20) is the case of a wristwatch.

8. Manufacturing method for a camera according to claim 6, method wherein at least the surface of the case (20) in which said lens assembly is mounted is ground after said lens assembly is mounted therein, by means of particles whose hardness is less than that of the material forming the front lens (3; 23).
